(19) Europäisches Patentamt
European Patent Office
Office européen des brevets

(11) Veröffentlichungsnummer: **0 291 796 B1**

(12) **EUROPÄISCHE PATENTSCHRIFT**

(45) Veröffentlichungstag der Patentschrift: **02.02.94**

(51) Int. Cl.5: **C08L 77/06**, //(C08L77/06, 23:26,51:06)

(21) Anmeldenummer: **88107379.5**

(22) Anmeldetag: **07.05.88**

Die Akte enthält technische Angaben, die nach dem Eingang der Anmeldung eingereicht wurden und die nicht in dieser Patentschrift enthalten sind.

(54) **Schlagzähe Polyamidformmassen.**

(30) Priorität: **19.05.87 DE 3716681**

283 653

(43) Veröffentlichungstag der Anmeldung:
**23.11.88 Patentblatt 88/47**

(45) Bekanntmachung des Hinweises auf die Patenterteilung:
**02.02.94 Patentblatt 94/05**

(84) Benannte Vertragsstaaten:
**CH DE ES FR GB IT LI**

(56) Entgegenhaltungen:
EP-A- 0 002 761
EP-A- 0 009 757
EP-A- 0 193 023

PATENT ABSTRACTS OF JAPAN, Band 8, Nr. 260 (C-254)[1697], 29. November 1984; & JP-A-59 136 369

PATENT ABSTRACTS OF JAPAN, Band 9, Nr. 306 (C-317)[2029], 3. Dezember 1985; & JP-A-60 144 361

PATENT ABSTRACTS OF JAPAN, Band 11, Nr. 150 (C-422)[2597], 15. Mai 1987; & JP-A-61

(73) Patentinhaber: **BAYER AG**

**D-51368 Leverkusen(DE)**

(72) Erfinder: **Nielinger, Werner, Dr.**
**Bärenstrasse 21**
**D-4150 Krefeld(DE)**
Erfinder: **Wittmann, Dieter, Dr.**
**Doerperhofstrasse 15**
**D-4150 Krefeld(DE)**
Erfinder: **Westeppe, Uwe, Dr.**
**Yorckstrasse 19**
**D-5630 Remscheid 11(DE)**
Erfinder: **Bottenbruch, Ludwig, Dr.**
**Wöhlerstrasse 5**
**D-4150 Krefeld(DE)**
Erfinder: **Kirsch, Jürgen, Dr.**
**Hahnenweg 1**
**D-5000 Köln 80(DE)**
Erfinder: **Füllmann, Heinz-Josef, Dr.**
**Am Schneeberg 31**
**D-5653 Leichlingen 2(DE)**

## Beschreibung

Die Erfindung betrifft mit Copolymeren aus Ethylen und Propylen schlagzäh modifizierte Copolyamide aus Adipinsäure, Terephthalsäure und Hexamethylendiamin, die sich durch hohe Konstanz des Moduls bei Einwirkung von Feuchtigkeit auszeichnen.

Formkörper aus Polyamiden haben wegen ihrer hohen Zähigkeit, Abriebfestigkeit, Steifigkeit und Härte mannigfache Anwendungen in der Praxis gefunden. Diese Eigenschaften sind aber keine konstanten Größen, sondern werden durch den Wassergehalt des Polyamids beeinflußt. So erreicht z.B. die Zähigkeit erst nach der Konditionierung, d.h. nach Feuchtigkeitsaufnahme, ihre optimalen Werte. Der Aufnahme der Feuchtigkeit und die notwendige gleichmäßige Verteilung des Wassers sind aber zeitraubende Vorgänge. Man hat daher schon lange nach geeigneten Zusätzen gesucht, die den Polyamiden sofort nach der Verarbeitung im trockenen Zustand eine hohe Zähigkeit verleihen.

Darüber hinaus ist auch eine Verbesserung der Zähigkeit bei tieferen Temperaturen wünschenswert, da bei den zunehmenden Anwendungen im technischen Bereich, insbesondere im Automobilsektor, eine hohe Tieftemperaturzähigkeit gefordert wird.

Eine Möglichkeit zur Verbesserung der Zähigkeit und der Flexibilität von Polyamid 6 und Polyamid 66 ist der Zusatz von niedermolekularen Weichmachern, die z.B. im Kunststoff-Handbuch von Vieweg-Müller, Band IV, Polyamide, Hanser Verlag München, 1966, auf den Seiten 242 und 243 genannt sind. Die Erhöhung der Zähigkeit durch diese Weichmacher ist nur gering, die Steifigkeit der Produkte nimmt deutlich ab. Viele Weichmacher neigen außerdem wegen ihrer Unverträglichkeit mit den Polyamiden zur Migration an die Oberfläche der Formteile, die dadurch ein unbefriedigendes Aussehen erhalten.

Die Migration der Additive an die Oberflächen der Formteile kann man verhindern, indem man polymere Modifikatoren einsetzt. Besonders interessant sind solche, die auch die Zähigkeit bei tiefen Temperaturen verbessern. Dazu sind vor allem Polyolefine und Kautschukmodifikatoren auf der Basis von gepfropften Polybutadienen und Polyacrylaten geeignet. Gepfropfte Polymerisate auf der Basis von Butadien sind z.B. aus der DE-A-2 758 615 und der DE-A-3 105 364 bekannt; Polymerisate auf der Basis von Acrylaten sind in der DE-A-3 200 070 beschrieben. Mischungen von Polyamiden mit diesen Kautschuktypen zeichnen sich im spritzfrischen Zustand gegenüber den unmodifizierten Polyamiden zwar durch eine erheblich verbesserte Zähigkeit im Tieftemperaturbereich aus, beim praktischen Einsatz aber, wenn die Mischungen etwas Feuchtigkeit aufgenommen haben, sinkt ihr E-Modul so stark ab, daß sie für die Herstellung selbsttragender, größerer Teile nicht geeignet sind. Diese leichte Deformierbarkeit geht auch mit einer geringeren Wärmeformbeständigkeit einher.

Gemäß der DE-A-1 131 883 werden Polyamide mit Polyolefinen in einem Scheibenkneter unter Zusatz von Peroxiden intensiver gemischt. Eine wesentlich feinere Dispergierung der Polyolefine im Polyamid kann man, wie in der De-A-1 241 606 beschrieben, durch Verwendung von Olefincopolymerisaten mit sauren Gruppen erzielen. Geeignet sind dazu z.B. Copolymerisate aus Ethylen und Methacrylsäure. Anstelle der Säuren können auch ihre Salze (US-A-3 845 163) oder Derivate, wie Ester (DE-A-1 669 702) eingesetzt werden, ferner Pfropf- oder Copolymerisate des Ethylens mit Maleinsäureanhydrid (DE-A-2 722 270). Diese Produkte haben alle eine verbesserte Zähigkeit im spritzfrischen Zustand; jedoch ist ihre Zähigkeit bei tiefen Temperaturen noch nicht befriedigend.

Anstelle des Ethylens werden auch Copolymerisate des Ethylens mit Propylen oder mit Propylen und einem weiteren Dien eingesetzt. Zur Verbesserung der Verträglichkeit mit dem Polyamid enthalten die Copolymeren Haftstellen, wie Carboxylgruppen oder Estergruppen, vor allem auch Maleinsäure oder Maleinsäureanhydrid. Diese Verbindungen können entweder einkondensiert oder nachträglich aufgepfropft sein. Derartige Mischungen sind z.B. aus den Patentschriften GB-A-998 439, DE-A-2 622 973, EP-A-0 034 704, JA-A-57 200 448, JA-A-59 164 359, bekannt. Die Wirksamkeit der Maleinsäureanhydridaddukte von Copolymeren aus Ethylen, Propylen und einem Dien als Nukleiermittel für Polyamide ist in der DE-A-3 036 881 und der EP-A-0 009 757 beschrieben.

Aus der JP 61 283 653 sind Formmassen aus Copolyamiden aus Terephthalsäure, Hexamethylendianim und anderen Dicarbonsäuren mit 4 bis 18 Kohlenstoffatomen und mit einem Maleinsäureanhydrid modifizierten Ethylencopolymerisat mit guter Schlagzähigkeit bekannt.

Diese genannten Mischungen der Polyamide mit den Ethylen-Propylen-Copolymeren haben eine hohe Zähigkeit auch bei tiefen Temperaturen, und eine für viele Anwendungen ausreichende Steifigkeit. Wenn aber Formteile aus diesen Mischungen beim Einsatz unter Praxisbedingungen Feuchtigkeit aufgenommen haben, nimmt die Steifigkeit sehr stark ab. Größere Teile können sich dann unter Belastung bereits bei wenig erhöhten Temperaturen verwerfen; sie sind dann nicht mehr ausreichend formbeständig.

Der Erfindung lag die Aufgabe zugrunde, Polyamide mit verbesserter Tieftemperaturzähigkeit und erhöhter Konstanz der Eigenschaften nach Wasseraufnahme, insbesondere des E-Moduls, zur Verfügung zu stellen.

Gegenstand der Erfindung sind Polyamidformmassen mit einem Modifikator, dadurch gekennzeichnet, daß sie

A) 65 bis 97 Gew.-% eines Copolyamids aus Adipinsäure, Terephthalsäure und Hexamethylendiamin

a) mit 25 bis 48 Gew.-% Einheiten des Hexamethylenterephthalamids
und

b) 52 bis 75 Gew.-% Einheiten des Hexamethylendipamids sowie

B) von 3 bis 35 Gew.-% eines mit einer CO.O.CO-Gruppe modifizierten Ethylencopolymers mit wenigstens 40 Gew.-% Ethylen und weiteren Olefinen wie Propylen, Buten-1, Hexen-1 oder Butadien als Modifikator, enthaltend

c) mindestens 50 Mol-% von Ethylen abgeleitete Einheiten
und

d) $10^{-7}$ bis $10^{-3}$ an Einheiten abgeleitet vom Maleinsäureanhydrid pro g modifizierten Ethylencopolymers,

polymerisiert enthalten.

Ein bevorzugter Gegenstand der Erfindung sind also Mischungen aus 65-97 Gew.-%, vorzugsweise 75-95 Gew.-%, eines Copolyamids aus Adipinsäure, Terephthalsäure und Hexamethylendiamin, das gegebenenfalls weitere Dicarbonsäuren, wie vor allem Isophthalsäure, enthalten kann und 3-35 Gew.-%, vorzugsweise 5-25 Gew.-%, eines carboxylgruppenhaltigen Olefincopolymerisates.

Bevorzugte Copolyamide sind aus der DE-A-3 407 492 und DE-A-3 506 656 bekannt. Sie setzen sich gemäß DE-A-3 407 492 zusammen aus 25 bis 48 Gew.-%, vorzugsweise 30 bis 45 Gew.-%, Einheiten des Hexamethylenterephthalamids und aus 52 bis 75 Gew.-%, vorzugsweise 55 bis 70 Gew.-%, Einheiten des Hexamethylenadipamids. In Betracht kommen ferner Copolyamide gemäß DE-A-3 506 656 mit 30,0 bis 51,5 Gew.-% Einheiten des Hexamethylenadipamids und 48,5 bis 60,0 Gew.-%, vorzugsweise 48,5 bis 55,0 Gew.-% Einheiten des Hexamethylenterephthalamids und bis zu 10,0 Gew.-%, bevorzugt bis zu 15,0 Gew.-%, Einheiten des Hexamethylenisophthalamids.

Die säurehaltigen Ethylen-Copolymerisate werden im allgemeinen aus wenigstens 40 Gew.-% Ethylen und weiteren Olefinen, wie Propylen, Buten-1, Hexen-1 oder Butadien, hergestellt. Bevorzugt sind Copolymerisate aus Ethylen und Propylen mit einem Ethylenanteil von 50 bis 90, vorzugsweise von 60 bis 80 Gew.-%.

Verbindungen mit einer aktiven -CO-O-CO-Gruppe sind vorzugsweise die aus der DE-A-2 722 270 bekannten Verbindungen, insbesondere mit Maleinsäureanhydrid modifizierte Copolymerisate.

Bevorzugte Ethylen-Copolymerisate sind beispielsweise aus der DE-A-2 420 942 bekannt.

Bevorzugte Polyamidformmassen haben nach einer 3-tägigen Konditionierung bei 50° in Wasser einen E-Modul von wenigstens 1300 MPa.

Die Herstellung der erfindungsgemäßen Produkte erfolgt im allgemeinen durch Mischen der Komponenten in der Schmelze. Man kann die Granulatmischung in eine Spritzgießmaschine geben und die gegebenenfalls einer mechanischen Scherung unterworfene Schmelze direkt zu Formkörpern verarbeiten. Vorteilhafter ist es jedoch, das Copolyamid und das Polyolefin in einem getrennten Arbeitsgang in einer handelsüblichen Maschine, z.B. in einem Doppelwellenextruder, zu mischen und die Mischung in bekannter Weise zu Formteilen zu verarbeiten.

Bei der Compoundierung können die üblichen Zuschlagstoffe und Hilfsmittel zugesetzt werden, z.B. Gleit- und Entformungsmittel, Nukleiermittel und Stabilisatoren, ferner Flammschutzmittel, Füllstoffe und Glasfasern. Als Füllstoffe kommen Mikroglaskugeln, Kreide, Quarze, wie Novaculit, ferner Silikate, wie Asbest, Feldspat, Glimmer, Talkum, Wollastonit sowie Kaolin in calcinierter und nicht calcinierter Form in Betracht. Außerdem sind Farbstoffe und Pigmente zu nennen.

Gegenüber bekannten schlagzähen modifizierten Polyamiden zeichnen sich die erfindungsgemäßen Produkte durch ihre hohe Konstanz der Eigenschaften, insbesondere des E-Moduls, nach der Aufnahme von Feuchtigkeit aus. Sie sind daher für alle Anwendungen geeignet, bei denen eine hohe Zähigkeit in Kombination mit hoher Steifigkeit verlangt wird, die bei Einfluß von Feuchtigkeit nicht nennenswert verändert wird. Der E-Modul, gemessen nach DIN 53 452, ist nach Konditionierung wenigstens 1300 MPa. Beispiele sind Formkörper und Spritzgießteile, Platten, Profile für den Maschinenbau und Automobilbau sowie größere, selbsttragende Gehäuse und Abdeckungen.

Beispiel 1

Man stellt eine Granulatmischung aus 80 Teilen eines Copolyamids und 20 Teilen eines Copolyolefins her. Das Copolyamid setzt sich aus 60 Gew.-% Polyhexamethylenadipamid-Einheiten und 40 Gew.-%

Polyhexamethylenterephthalamid-Einheiten zusammen. Die relative Viskosität, gemessen an einer einprozentigen Lösung des Copolyamids in m-Kresol bei 25°C, in einem Ubbelohde-Viskosimeter, ist 3,1.

Bei dem Copolyolefin handelt es sich um ein Copolymeres aus Ethylen und Propylen mit 0,7 Gew.-% aufgepfropftem Maleinsäureanhydrid. Der Ethylengehalt ist 75 Gew.-%.

Die genannte Mischung wird in einem Doppelwellenextruder mit einem Durchsatz von 8 kg/h bei einer Massetemperatur von 305°C compoundiert. Die Eigenschaften dieser Mischung sind in der folgenden Tabelle zusammengefaßt:

| Eigenschaft | Maßeinheit | Meßvor- schrift | |
|---|---|---|---|
| Relative Viskosität, gemessen an einer 1%igen Lösung im m-Kresol bei 25°C in einem Ubbelohde Viskosimeter | | | 2,44 |
| Kerbschlagzähigkeit | J/m | ASTM D 256 | 1253 |
| Steilabfall der Zähigkeit | | | -10°C bis -20°C |
| E-Modul (Biegever- such) bei: | | | |
| a) Raumtemperatur | MPa | DIN 53 452 | 1478 |
| b) bei 50°C | MPa | DIN 53 452 | 1216 |
| c) nach 3 Tagen Kon- ditionierung in Was- ser (0,77 % Wasser) | MPa | DIN 53 452 | 1532 |
| d) bei 1,4 % Wasserge- halt | MPa | DIN 53 452 | 1403 |

Vergleichsbeispiel 1

Beispiel 1 wird wiederholt, wobei anstelle des Copolyamids ein Polyhexamethylenadipamid mit einer relativen Viskosität von 3,0 verwendet wird. Die Compoundierung erfolgte mit einem Durchsatz von 8 kg/h bei einer Massetemperatur von 282°C. Die Mischung hat folgende Eigenschaften:

4

| Eigenschaft | Maßein-heit | Meßvor-schrift | |
|---|---|---|---|
| Relative Viskosität | | | 2,50 |
| Kerbschlagzähigkeit | J/m | ASTM D 256 | 1097 |
| Steilabfall der Zähigkeit | | | 0° C-10° C |
| E-Modul (Biege-versuch | | | |
| a) bei Raumtemperatur | MPa | DIN 53 452 | 1681 |
| b) bei 50° C | MPa | DIN 53 452 | 1034 |
| c) nach 3 Tagen Kon-ditionierung in Wasser (1,11 % Wasser) | MPa | DIN 53 452 | 1115 |
| d) bei 1,4 % Wasser-gehalt | MPa | DIN 53 452 | 1047 |

Gegenüber diesem Vergleichsbeispiel hat das erfindungsgemäße Produkt aus Beispiel 1 eine höhere Zähigkeit; der Abfall der Zähigkeit beginnt erst bei tieferen Temperaturen.

Der E-Modul des erfindungsgemäßen Produktes aus Beispiel 1 ist zwar bei Raumtemperatur niedriger als der des Vergleichsproduktes, liegt aber bei 50 °C und nach Konditionierung sowohl über einen gleichen Zeitraum als auch auf gleichem Wassergehalt deutlich höher.

Beispiel 2

Beispiel 1 wird wiederholt, wobei das Polyolefin ein Copolymeres aus Ethylen und Propylen mit 0,55 % aufgepfropftem Maleinsäureanhydrid ist. Der Ethylengehalt beträgt 65 %.

| Eigenschaft | Maßein-heit | Meßvor-schrift | |
|---|---|---|---|

---

| Relative Viskosität | | | 2,29 |
|---|---|---|---|
| Kerbschlagzähigkeit | J/m | ASTM D 256 | 1050 |
| Steilabfall der Zähigkeit | | | -20/30° C |
| E-Modul (Biegeversuch) bei | | | |
| a) Raumtemperatur | MPa | DIN 53 452 | 1500 |
| b) 50° C | MPa | DIN 53 452 | 1253 |
| c) nach 3 Tagen Konditionierung in Wasser (0,95 % Wassergehalt) | MPa | DIN 53 452 | 1593 |
| d) 1,3 % Wassergehalt | MPa | DIN 53 452 | 1436 |

Vergleichsbeispiel 2

Beispiel 1 wird wiederholt, wobei anstelle des Polyolefins 30 % eines Schlagzähmodifikators aus 80 % vernetztem Polybutadien als Pfropfgrundlage, auf die 18 % Methylmethacrylat und 2 % tert.-Butylacrylat aufgepfropft sind, verwendet worden. Selbst bei dem höheren Anteil an Schlagzähmodifikator beträgt die Kerbschlagzähigkeit nur 398 J/m; der Steilabfall der Zähigkeit liegt oberhalb Raumtemperatur. Das Verhalten des Moduls ist ähnlich wie in Beispiel 1.

| Eigenschaft | Maßein-heit | Meßvor-schrift | |
|---|---|---|---|

---

| E-Modul bei | | | |
|---|---|---|---|
| a) Raumtemperatur | MPa | DIN 53 452 | 1535 |
| b) 50° C | MPa | DIN 53 452 | 1155 |
| c) nach 3 Tagen Konditionierung in Wasser (0,95 % Wassergehalt) | MPa | DIN 53 452 | 1561 |
| d) bei 1,3 % Wassergehalt | MPa | DIN 53 452 | 1591 |

Vergleichsbeispiel 3

Beispiel 1 wird wiederholt, wobei anstelle des Polyolefins 30 % eines Schlagzähmodifikators aus 70 % vernetztem Acrylatkautschuk als Pfropfgrundlage, auf den 14 % Methylmethacrylat und 6 % tert.-Butylacrylat aufgepfropft sind, verwendet worden. Selbst bei dem höheren Anteil an Schlagzähmodifikator beträgt die Kerbschlagzähigkeit nur 261 J/m; der Steilabfall der Zähigkeit liegt oberhalb Raumtemperatur. Das Verhalten des Moduls ist ähnlich wie in Beispiel 1.

| Eigenschaft | Maßeinheit | Meßvorschrift | |
|---|---|---|---|
| E-Modul bei | | | |
| a) Raumtemperatur | MPa | DIN 53 452 | 1462 |
| b) 50° C | MPa | DIN 53 452 | 1079 |
| c) nach 3 Tagen Konditionierung in Wasser (0,95 % Wassergehalt) | MPa | DIN 53 452 | 1481 |
| d) bei 1,3 % Wassergehalt | MPa | DIN 53 452 | 1508 |

**Patentansprüche**

1. Polyamidformmassen mit einem Modifikator, dadurch gekennzeichnet , daß sie
   A) 65 bis 97 Gew.-% eines Copolyamids aus Adipinsäure, Terephthalsäure und Hexamethylendiamin
      a) mit 25 bis 48 Gew.-% Einheiten des Hexamethylenterephthalamids
   und
      b) 52 bis 75 Gew.-% Einheiten des Hexamethylendipamids sowie
   B) von 3 bis 35 Gew.-% eines mit einer CO.O.CO-Gruppe modifizierten Ethylencopolymers mit wenigstens 40 Gew.-% Ethylen und weiteren Olefinen wie Propylen, Buten-1, Hexen-1 oder Butadien als Modifikator, enthaltend
      c) mindestens 50 Mol-% von Ethylen abgeleitete Einheiten
   und
      d) $10^{-7}$ bis $10^{-3}$ an Einheiten abgeleitet vom Maleinsäureanhydrid pro g modifizierten Ethylencopolymers,
   polymerisiert enthalten.

2. Formmassen nach Anspruch 1, dadurch gekennzeichnet, daß die Formmassen 75 bis 95 Gew.-% des Copolyamids A) und 25 bis 5 Gew.-% des mit Maleinsäureanhydrid modifizierten Ethylencopolymers B) enthalten.

3. Formmassen nach Ansprüchen 1 und 2, dadurch gekennzeichnet, daß das Polyamid a) 30 bis 45 Gew.-% an Einheiten des Hexamethylenterephthalamids und 55 bis 70 Gew.-% an Einheiten des Hexamethylendipamids enthält.

4. Formkörper aus Formmassen gemäß einem der Ansprüche 1 bis 3.

**Claims**

1. Polyamide moulding compounds containing a modifier, characterized in that they contain
   A) 65 to 97% by weight of a copolyamide of adipic acid, terephthalic acid and hexamethylene diamine
      a) with 25 to 48% by weight hexamethylene terephthalamide units
   and
      b) 52 to 75% by weight hexamethylene adipamide units and

B) from 3 to 35% by weight of at least one ethylene copolymer modified with a CO.O.CO group and containing 40% by weight ethylene and other olefins, such as propylene, but-1-ene, hex-1-ene or butadiene, as modifier with

    c) at least 50 mol-% units derived from ethylene

and

    d) $10^{-7}$ to $10^{-3}$ units derived from maleic anhydride per g modified ethylene copolymer,

in polymerized form.

2.   Moulding compounds as claimed in claim 1, characterized in that the moulding compounds contain 75 to 95% by weight of the copolyamide A) and 25 to 5% by weight of the ethylene copolymer B) modified with maleic anhydride.

3.   Moulding compounds as claimed in claims 1 and 2, characterized in that the polyamide a) contains 30 to 45% by weight hexamethylene terephthalamide units and 55 to 70% by weight hexamethylene adipamide units.

4.   Moulded articles of the moulding compounds claimed in any of claims 1 to 3.

**Revendications**

1.   Compositions à mouler à base de polyamides comportant un modificateur, caractérisées en ce qu'elles contiennent à l'état polymérisé

    A) 65 à 97 % en poids d'un copolyamide d'acide adipique, d'acide téréphtalique et d'hexaméthylènediamine,

        a) avec 25 à 48 % en poids de motifs d'hexaméthylènetéréphtalamide et

        b) 52 à 75 % en poids de motifs d'hexaméthylène-adipamide ainsi que

    B) 3 à 35 % en poids d'un copolymère d'éthylène modifié par un groupe CO.O.CO avec au moins 40 % en poids d'éthylène et d'autres oléfines telles que propylène, butène-1, hexène-1 ou butadiène comme modificateur, contenant

        c) au moins 50 moles % de motifs dérivés d'éthylène

    et

        d) $10^{-7}$ à $10^{-3}$ mole de motifs dérivés d'anhydride d'acide maléique par gramme de copolymère d'éthylène modifié.

2.   Compositions à mouler suivant la revendication 1, caractérisées en ce qu'elles contiennent 75 à 95 % en poids du copolyamide A et 25 à 5 % en poids de copolymère d'éthylène B modifié par l'anhydride d'acide maléique.

3.   Compositions à mouler suivant les revendications 1 et 2, caractérisées en ce que le polyamide a) contient 30 à 45 % en poids de motifs d'hexaméthylènetéréphtalamide et 55 à 70 % en poids de motifs d'hexaméthylène-adipamide.

4.   Pièces façonnées à partir de compositions à mouler suivant l'une des revendications 1 à 3.